# EUROPÄISCHE PATENTSCHRIFT

(11) **EP 0 750 766 B1**
(45) Veröffentlichungstag und Bekanntmachung des Hinweises auf die Patenterteilung: **20.08.1997**
(21) Anmeldenummer: 95910433.2
(22) Anmeldetag: 02.03.1995
(51) Int. Cl.: G06F 9/445

(54) **AUTOMATISCHE INSTALLATION**
AUTOMATIC INSTALLATION
INSTALLATION AUTOMATIQUE

(30) Priorität: 14.03.1994 DE 4408544
(43) Veröffentlichungstag der Anmeldung: 02.01.1997
(73) Patentinhaber: Siemens Nixdorf Informationssysteme AG, 33106 Paderborn (DE)
(72) Erfinder: LINDEBLATT, Axel, D-13467 Berlin (DE)
(74) Vertreter: Fuchs, Franz-Josef, Dr.-Ing.
(86) Internationale Anmeldenummer: DE9500275
(87) Internationale Veröffentlichungsnummer: WO9525303

(56) Entgegenhaltungen:
- IBM TECHNICAL DISCLOSURE BULLETIN, Bd.34, Nr.10A, März 1992, NEW YORK, US Seiten 82 - 84 'REMOTE SOFTWARE INSTALLATION PROTOCOL'
- IBM TECHNICAL DISCLOSURE BULLETIN, Bd.34, Nr.10A, März 1992, NEW YORK, US Seiten 13 - 17 'SOFTWARE CUSTOM INSTALLATION FOR NODES IN A NETWORK'
- OS/2 2.X NOTEBOOK (DICK CONKLIN, GENERAL EDITOR), 1993, NEW YORK, US Seiten 127 - 134 BARBARA KOOB: 'A Farewell To SneakerNet'
- IBM TECHNICAL DISCLOSURE BULLETIN, Bd.34, Nr.10B, März 1992, NEW YORK, US Seiten 328 - 329 'OPERATING SYSTEM CHANGE UTILITY FOR REMOTE IPL WORKSTATIONS'

## Beschreibung

### Technisches Gebiet

Das Verfahren betrifft die Installation von Software auf Datenverarbeitungsanlagen vor deren Auslieferung an Kunden.

### Stand der Technik

Bislang werden Datenverarbeitungsanlagen, auch Arbeitsplatzrechner für persönliche Benutzung durch nur einen Benutzer (sog. Personal Computer), in der Regel ohne installiertes Betriebssystem und installierte Anwendungsprogramme ausgeliefert. Die Installation der Software wird dann durch den Käufer und Betreiber durchgeführt. Es besteht jedoch der Wunsch des Kunden, daß auf dem gekauften Rechner die gleichzeitig gekaufte Software bereits vollständig installiert ist. Die gleiche Forderung gilt für Rechner mit fest zugeordnete Aufgaben, beispielsweise Computerkassen, für die kundenspezifische Softwarekonfigurationen bereitgestellt werden müssen. Sofern es sich nur um wenige Standard-Konfigurationen handelt, kann diese Aufgabe leicht durch Kopieren von Muster-Datenträgern erreicht werden. In allen anderen Fällen muß bislang die Installation manuell durch einen qualifizierte Softwaretechniker durchgeführt werden.

Besondere Probleme ergeben sich in sicherheitsrelevanten Bereichen, in denen Arbeitsplatzrechner ohne vom Anwender betriebsmäßig auswechselbaren Datenträger eingesetzt werden sollen. Bislang muß dort zunächst beispiesweise ein Diskettenlaufwerk angeschlossen, der Installationsvorgang durchgeführt, und dann das Diskettenlaufwerk demontiert werden. Ähnliches gilt für Geräte ohne Standard-Bildschirm und - Tastatur, wie beispielsweise die oben erwähnten Computerkassen. Bislang mußten für die Installation beide Geräte angeschlossen werden und die zugehörigen Schnittstellen am ausgelieferten Geräte vorhanden sein.

In dem Dokument IBM TDB, Vol. 34, No. 10A, March 1992, pp82-84, "Remote Software Installation Protocol" wird eine Installation von Microcode und eines Betriebssystems über eine Datenverbindung beschrieben.

Aufgabe der Erfindung ist es daher, einen Weg zu finden, mit dem der gesamte Installationsvorgang weitgehend automatisiert werden kann, ohne daß Benutzereingaben oder auswechselbare Datenträger erforderlich sind.

### Darstellung der Erfindung

Die Erfindung nutzt die Erkenntnis aus, daß die zu konfigurierenden Rechner über eine Datenkommunikationseinrichtung verfügen. Vielfach ist diese Datenkommunikationseinrichtung als Anschluß an ein lokales Netz (LAN) ausgebildet und weist damit eine hohe Übertragungsrate auf. Die Erstinstallation besteht darin, daß zunächst durch ein in einem Boot-PROM festgelegten Einfach-Filetransfer ein Hilfsprogramm, das im Grunde ein minimales Betriebssystem ist, aus einem am LAN angeschlossenen Server-Rechner in den Speicher geladen wird. Dieses Hilfsprogramm ist Netzwerk-fähig, bestimmt die Bestellnummer der aktuell zu erzeugenden Konfiguration, beispielsweise über eine Tastatureingabe, und übermittelt diese an einen Server auf der an das LAN angeschlossenen Versorgungsanlage. Dieser bestimmt aus den Bestelldaten die zu installierenden Komponenten und überträgt diese an den einzurichtenden Rechner. Einzelheiten dieser Vorgänge und vorteilhafter Weiterbildungen sind aus der folgenden Beschreibung zu entnehmen.

### Kurzbeschreibung der Zeichnungen

### Es zeigen

- Fig. 1: eine Anordnung von Versorgungs- und Zielrechnern
- Fig. 2: die Konfiguration eines Zielrechners

### Detaillierte Beschreibung der Erfindung

Die im folgenden erwähnten, die Software-Schnittstellen des amerikanischen Internet Netzwerks beschreibendem, mit "RFC" bezeichneten Dokumente sind über elektronische Post von der Adresse SERVICE @ NIC.DDN.MIL öffentlich erreichbar und im DDN Protocol Handbook abgedruckt.

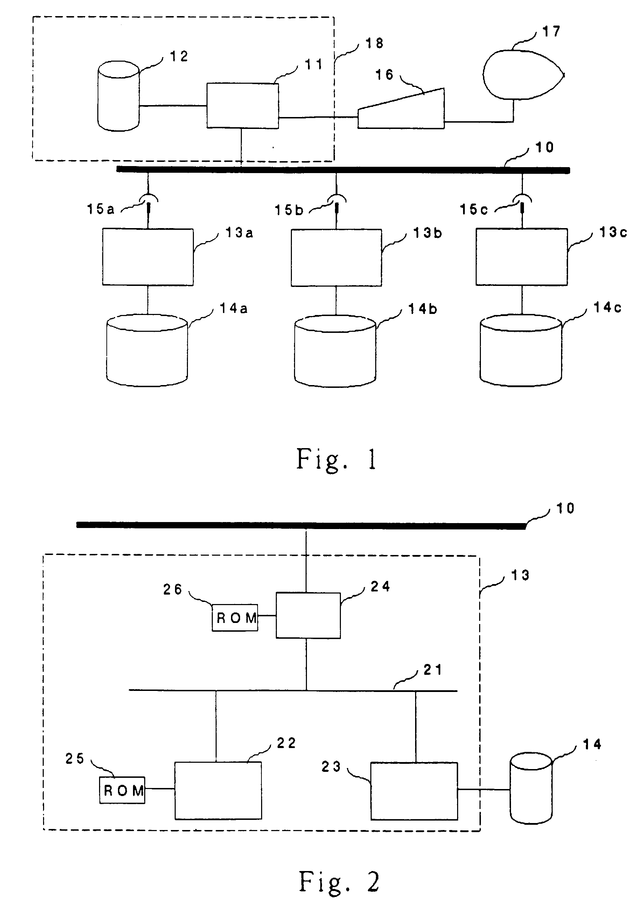

In Fig. 1 ist eine typische Anordnung von Versorgungs- und Zielrechnern dargestellt. Ein Netzwerk 10, hier im Beispiel ein "Local Area Network" (LAN), beispielsweise Ethernet, verbindet die Versorgungsanlage 18 mit den Zielrechnern 13a..c. Zur Vereinfachung der Darstellung ist die Versorgungsanlage 18 als ein einzelner Rechner dargestellt; dieser kann gegebenenfalls durch einen Mehrfach-Rechner oder einen Verbund von Rechnern realisiert sein. Beispielsweise kann ein Siemens Nixdorf PCD-D System mit 80486 CPU, 16MB Arbeitsspeicher, 600MB Festplatte und LAN-Controller WD8003EB unter dem Betriebssystem SINIX verwendet werden.

Ferner sind, als Beispiel eine Anzahl von drei, Zielrechner 13a..c dargestellt, die über einen Netzwerkanschluß verfügen. Diese Zielrechner sind funktionsfähig, enthalten aber keine Betriebs- und Anwendungssoftware auf den an sie angeschlossenen Plattenspeichern 14a..14c. Beispielsweise können dies Siemens Nixdorf PC-Systeme mit 80386 CPU, 4MB Arbeitsspeicher, 80MB Festplatte und LAN-Controller WD8003EB sein. Ein Diskettenlaufwerk ist nicht nötig, jedoch muß dann der LAN-Controller ein BOOT-PROM enthalten.

Die Betriebs- und Anwendungssoftware ist vielmehr auf einem oder mehreren an die Versorgungsanlage 18 angeschlossenen Speichern 12, beispielsweise Plattenspeichern, gespeichert. Die Speicherung erfolgt dabei, insbesondere für Anwendungssoftware, häufig in als Archivdateien bezeichneten Formaten.

Diese Archivdateien werden durch ein Installationsprogramm bearbeitet und erzeugen dann auf den Zielspeichern 14a..c die benötigte Betriebs- oder Anwendungssoftware. Dabei wird die tatsächlich vorhandene Konfiguration von Hardware und bereits installierter Software berücksichtigt und demgemäß Steuerdateien angelegt und nur bestimmte Dateien angelegt bzw. nicht benötigte, in der Archivdatei vorhandene Dateien nicht auf dem Zielspeicher angelegt.

Der Ablauf der Installation erfolgt dergestalt, daß durch Steckverbindungen 15a..c die noch nicht mit der vom zukünftigen Benutzer benötigten Software ausgestatteten Zielsysteme 13a..c mit dem Netzwerk verbunden werden. In Fig. 2 ist dargestellt, daß die Zielsysteme 13 mindestens eine Zentraleinheit 22, einen Plattenspeicher 14 mit Steuereinheit 23 und eine Datenübertragungseinrichtung 24 enthalten, die beispielsweise über einen internen Bus 21 gekoppelt sind. Zum Anlauf des Systems ist die Zentraleinheit 22 mit einem Festwertspeicher 25 ausgestattet, in dem das Programm für den Systemanlauf ("bootstrap", BOOT) enthalten ist. Dieser Systemanlauf wird im an die Systeminstallation anschliessenden späteren Regelfall damit enden, daß eine nachfolgende Ladestufe von dem Plattenspeicher 14 geladen wird. Da diese jedoch noch nicht vorhanden ist, wird eine Erweiterung des BOOT-BIOS 25 durch einen weiteren Festwertspeicher 26 benutzt. Diese Erweiterung kann auch von vornherein in dem BOOT-BIOS-ROM 25 enthalten sein und ist beispielsweise in dem Dokument "Bootstrap Protocol" RFC 951 beschrieben. Durch dieses "Bootstrap Protocol" wird zunächst nur dafür gesorgt, daß dem Ziel- und dem Versorgungssystem die jeweiligen Adressen festgelegt werden. Die Ausprägung dieses Protokolls kann unterschiedlich erfolgen. Im optimalen Einsatzfall kann das BIOS-ROM 25 die Ethernet-Adresse des Controllers 24 ermitteln und diese bereits an den Versorgungsrechner weitergeben. Werden andere als die in den folgenden Beispielen benutzten Internet-Protokolle verwendet, so kann dieser Schritt gegebenenfalls auch entfallen, wenn diese Protokolle auf der Ebene der Hardware-Adressen arbeiten und die Versorgungsanlage eine vorbestimmte Hardware-Adresse gegeben werden kann.

Über das TFTP-Protokoll, wie es im Dokument RFC 783 dargestellt ist, wird ein Hilfs-Programm in den Arbeitsspeicher geladen und ihm anschließend Kontrolle übergeben. Dieses Hilfs-Programm ist ein minimales Betriebssystem und stellt erweiterte Datenübertragungsprotokolle zur Verfügung, zum Beispiel das "File Tranfer Protocol" FTP entsprechend RFC 959 oder das "Network File System" NFS nach RFC 1094. Das NFS hat den Vorteil, daß die Archivdateien nicht auf dem Plattenspeicher der Zielanlage zwischengespeichert werden müssen. Mittels FTP oder NFS wird nun ein Betriebssystem-Installationsprogramm geladen und zur Ausführung gebracht. Dieses Installationsprogramm formatiert die Festplatte und erstellt anschließend auf der Festplatte einen Ladesektor und das gewünschte Betriebssystem, beispielsweise MS-DOS oder UNIX. Dieses Betriebssystem ist so vorbereitet, daß es beim Start nicht in einen Anwender-Modus wechselt, sondern ein Installationsprogramm ausführt. Hierzu kann beispielsweise ein Datenvolumen von 3,5 Megabyte notwendig sein. Nachdem das Betriebssystem installiert wurde, führt das Betriebssystem-Installationsprogramm ein Neuladen durch, das jetzt, da ein Betriebssystem auf der Festplatte vorhanden ist, dieses lädt und ausführt. Es ist auch möglich, das das Hilfsprogramm bereits alle Schnittstellen des nachfolgenden Betriebssystems aufweist, so daß ein Neustart des Systems nach Vorbereitung der Festplatte entfallen kann. Das vorbereitete Betriebssystem führt nun eine oder mehrere vorbereitete Installationsprozeduren durch. Dabei werden Installations-Archive von der Versorgungsanlage 18 geladen oder per NFS angesprochen, in der Zielanlage entpackt und damit Anwendungsprogramme konfiguriert. Diese Konfigurierung erfolgt jetzt unter dem Betriebssystem, unter dem die Anwendungsprogramme später auch ablaufen sollen.

Dabei sind insbesondere die Vorgänge zur Auswahl der zu installierenden Komponenten praktisch vollständig automatisierbar, wie im folgenden dargestellt wird.

Im einfachsten Fall ist eine Bedienperson vorhanden, die den Zielrechner an das gewöhnliche Spannungsversorgungsnetz, also beispielsweise 220V Wechselstrom, und sodann den Zielrechner an das Netzwerk, zum Beispiel Ethernet, anschließt. Sodann bedient er ein Datenterminal der Versorgungsanlage 18 mit Tastatur 16 und Anzeigeeinheit 17, wobei er eine Liste der zu installierende Software eingibt. Danach wird das Zielsystem eingeschaltet und mit zu installierender Software, wie oben beschrieben, geladen. Die Zuordnung geschieht dabei einfach durch die Reihenfolge, in der die Zielmaschinen eingeschaltet werden. Nach Eingabe der Liste der zu installierenden Software und Einschalten des Zielrechners kann die Bedienperson denselben Vorgang für den nächsten Zielrechner durchführen. Eine Anzeige auf dem Zielrechner oder der Versorgungsanlage zeigt der Bedienperson an, daß der Installationsvorgang erfolgreich abgeschlossen wurde, der Zielrechner abgeschaltet, verpackt und verschickt werden kann und der Netzwerkanschluß für den nächsten zu installierenden Zielrechner verwendet werden kann.

Eine Verbesserung ist erreichbar, indem die Bedienperson nur noch eine Kennung des als nächstes angeschlossenen Zielrechners, beispielsweise die Auftragsnummer, eingibt. Die Versorgungssoftware auf der Versorgungsanlage ermittelt dann über eine Tabelle die bestellte und zu liefernde Software und installiert diese. Damit ist die Fehlerquelle einer Eingabe von Software-Bezeichnungen nicht mehr möglich. Diese Tabelle kann auch durch eine Datenbank realisiert sein, in der die Aufträge mit den bestellten Komponenten abgespeichert sind. Gegegebenenfalls kann dieser Datenbankzugriff auch durch Client-Server- oder andere Techniken zur verteilten Verarbeitung durchgeführt werden. Dabei kann in der Datenbank ein Vermerk angebracht werden, daß die installierte Software nunmehr eine Lizenz dem Kunden erteilt wurde. Damit ist die Abrechnung von Software-Lizenzen erheblich vereinfacht und sichergestellt, daß nur tatsächlich ausgelieferte und nicht wohlmöglich nur bestellte Software lizensiert wird.

Eine weitere Verbesserung ist möglich, wenn, wie beispielsweise im Ethernet üblich und empfohlen, jeder LAN-Controller 24 eine eindeutige Nummer hat, mit Hilfe derer die an ihn gerichteten Datenpakete adressiert werden. Diese Nummer besteht aus einem Hersteller-Teil und einer Seriennummer, so daß diese Nummern weltweit eindeutig sind. Das durch TFTP geladene Hilfs-Programmm benutzt diese Nummer, um den nachfolgenden Auftrag zur Übermittlung des zu ladenden Betriebssystems zu qualifizieren. Dabei enthalten die Datenbanken auf der Versorgungsanlage beispielsweise eine Konkordanz zwischen der Seriennummer des im Montageverlauf installierten Netzwerk-Controllers und seiner Ethernet-Adresse. Damit ist keine Eingabe der Bedienperson, die den Zielrechner installiert und eingeschaltet hat, notwendig; der gesamte Installationsvorgang läuft an Hand der in der Versorgungsanlage und den damit gekoppelten Rechnern enthaltenen Bestelldaten vollautomatisch und zuverlässig.

Als Netzwerk kann anstelle von Ethernet auch jedes andere Netzwerk, beispielsweise unter Verwendung serieller Datenübertragung nach RS232 verwendet werden. In diesem Falle kann das SLIP Protokoll nach RFC 1055 benutzt werden. Die Verwendung eines RS232-Anschlusses ist besonders sinnvoll, wenn dieser ohnehin für Zwecke der Fernwartung vorhanden ist.

Anstelle einer Erstinstallation kann auch nach demselben Verfahren eine Installation auf den neuesten Stand gebracht werden (Update). Die Anwahl des Verfahrens kann dabei über einen speziellen Schalter, der vom Boot-PROM abgetastet wird, oder über ein dafür vorgesehenes Kommando der Benutzerschnittstelle erfolgen. In beiden Fällen wird auf der Versorgungsanlage ermittelt, welche Software zu ersetzen oder nachzuinstallieren ist.

Das Verfahren ist auch vorteilhaft, wenn die Zielanlage einen wechselbaren Datenträger unterstützt, von dem das Betriebssystem und die Anwendungspakete manuell geladen werden könnten, weil die Installation ohne Eingriff einer Bedienperson erfolgt. Auf Anforderung in der Bestellung kann bei der Installation ein oder mehrere auswechselbare Datenträger mit Sicherungsdaten beschrieben werden, die dem Kunden für den Fall einer Beschädigung der Hard- oder Software einen Restaurierung seines Systems erlauben. Diese Datenträger werden wahlweise entweder auf der Zielanlage nach erfolgter Installation automatisch erstellt, indem das Installations-Steuerprogramm nach Installation aller Zielsysteme eine Datensicherung durchführt. Es kann aber auch eine Datensicherung auf an die Anlage angeschlossene Datenspeicher mit wechselbarem Medium erfolgen, die teilweise mit der Installation überlappen kann. Dabei werden wahlweise entweder die Programmpakete im uninstallierten Zustand geschrieben oder die nach der Installation auf der Zielanlage resultierenden Dateien auf den Sicherungs-Datenträger übertragen. Hierbei ist ein Datenspeicher mit automatischer Wechseleinrichtung sinnvoll, welche, von der Versorgungsanlage in Zusammenspiel mit dem Zielrechner gesteuert, leere Disketten oder Magnetbandkassetten aus einem Vorratsstapel entnimmt, in den Datenspeicher montiert, nach dem Beschreiben etikettiert und auf einer Ausgabe ablegt. Die hierzu notwendigen Einrichtungen sind aus der Automation von Fabrikanlagen hinreichend bekannt. Die Bedienperson entnimmt den Stapel der so erzeugten Datenträger nach Beendigung der Installation und packt sie dem auslieferungsfertigen Zielrechner bei.

## Patentansprüche

1. Verfahren zur Installation von Software-Komponenten auf als Zielrechner (13, 13a..c) fungierenden ersten Datenverarbeitungseinrichtungen, die über Datenübertragungsmittel (10) mit als Versorgungsanlage (18) fungierenden zweiten Datenverarbeitungseinrichtungen verbunden sind, wobei
- in einem ersten Schritt ein Hilfsprogramm ein für die nachfolgenden Schritte vorbereitetes Betriebssystem zum Zielrechner überträgt, installiert und startet,
gekennzeichnet dadurch, daß
- das Betriebssystem so vorbereitet wurde, daß anstelle einer für den späteren Gebrauch bestimmten Benutzerschnittstelle ein Installations-Steuerprogramm auf dem Zielrechner (13) ausgeführt wird,
- in weiteren Schritten das Installations-Steuerprogramm zu installierende Programmpakete von der Versorgungsanlage (18) empfängt und deren Installationsprozeduren, die in den übertragenen Programmpaketen enthalten sind, ausführt,
- in einem letzten Schritt das Installations-Steuerprogramm die Vorbereitung des Betriebssystems annulliert, so daß nach dem Neustart des Zielrechners das Betriebssystem die durch die Installation bestimmte Benutzerschnittstelle aktiviert.

2. Verfahren nach Anspruch 1, wobei das Hilfsprogramm in einem Festwertspeicher auf dem Zielrechner permanent vorhanden ist.

3. Verfahren nach Anspruch 1, wobei das Hilfsprogramm auf der Versorgungsanlage (18) gespeichert ist und durch ein in einem Festwertspeicher auf dem Zielrechner befindliches Urstart-Programm von der Versorgungsanlage auf die Zielanlage übertragen und ausgeführt wird.

4. Verfahren nach einem der Ansprüche 1 bis 3, wobei die Ausführung beziehungsweise Übertragung und Ausführung des Hilfsprogramms dann erfolgt, wenn kein gültiges Betriebssystem feststellt wird oder in einem Konfigurationsspeicher eine Markierung gesetzt ist.

5. Verfahren nach einem der vorhergehenden Ansprüche, wobei die Auswahl der zu installierenden Programmpakete auf der Versorgungsanlage erfolgt.

6. Verfahren nach einem der vorhergehenden Ansprüche, wobei das Datenübertragungsmittel (24) des Zielrechners (13) eine eindeutige Netzwerkadresse hatund das zu installierende Betriebssystem bzw. die zu installierenden Programmpakete durch diese Netzwerkadresse bestimmt werden.

7. Verfahren nach einem der vorangehenden Ansprüche, wobei anstelle einer vollständigen Neuinstallation eine Ersatz-, Korrektur- oder Ergänzungsinstallation erfolgt.

8. Verfahren nach einem der vorangehenden Ansprüche, wobei während oder nach der Installation mit dem Zielrechner auszuliefernde auswechselbare Datenträger für Zwecke der Datensicherung beschrieben werden.

9. Verfahren nach Anspruch 8, wobei die auswechselbaren Datenträger von einer an der Versorgungsanlage angeschlossenen Vorrichtung beschrieben werden.

## Claims

1. Process for the installation of software components on first data processing facilities, acting as target computers (13, 13a..c), which are connected via data transmission means (10) to second data processing facilities, acting as a supply system (18), in which process
- in a first step, an auxiliary program transfers to the target computer an operating system prepared for the subsequent steps, installs it and starts it,
characterized in that
- the operating system has been prepared such that, instead of a user interface intended for later use, an installation control program is executed on the target computer (13),
- in further steps, the installation control program receives from the supply system (18) program packages to be installed and executes their installation procedures, which are contained in the transmitted program packages,
- in a final step, the installation control program nullifies the preparation of the operating system, so that, after the restart of the target computer, the operating system activates the user interface determined by the installation.

2. Process as claimed in Claim 1, the auxiliary program being permanently present in a read-only memory on the target computer.

3. Process as claimed in Claim 1, the auxiliary program being stored on the supply system (18) and transferred by an initial starting program, located in a read-only memory on the target computer, from the supply system to the target system and executed.

4. Process as claimed in one of claims 1 to 3, the execution or transfer and execution of the auxiliary program taking place whenever no valid operating system is found or a marking has been set in a configuration memory.

5. Process as claimed in one of the preceding claims, the selection of the program packages to be installed taking place on the supply system.

6. Process as claimed in one of the preceding claims, the data transmission means (24) of the target computer (13) having a unique network address and the operating system to be installed or the program packages to be installed being determined by this network address.

7. Process as claimed in one of the preceding claims, a replacement, corrective or supplementary installation taking place instead of a complete new installation.

8. Process as claimed in one of the preceding claims, exchangeable data media to be delivered with the target computer being written to for the purposes of data backup during or after the installation.

9. Process as claimed in Claim 8, the exchangeable data media being written to by an apparatus connected to the supply system.

## Revendications

1. Procédé d'installation de composantes logicielles sur des premiers dispositifs de traitement de données, qui font office d'ordinateurs cibles (13, 13a... c) et qui sont reliés à des seconds dispositifs de traitement de données faisant office d'installation (18) d'alimentation par l'intermédiaire de moyens (10) de transmission de données, dans lequel
- au cours d'une première étape, un programme auxiliaire transmet à l'ordinateur cible un système d'exploitation préparé pour les étapes suivantes, l'installe et le fait démarrer,
caractérisé en ce que
- on a préparé le système d'exploitation, de sorte à exécuter sur l'ordinateur cible (13) un programme de commande d'installation au lieu d'une interface utilisateur déterminée pour l'usage ultérieur,
- au cours d'étapes suivantes, le programme de commande d'installation reçoit de l'installation (18) d'alimentation des paquets de programmes à installer et exécute leurs procédures d'installation, qui sont contenues dans les paquets de programmes transmis,
- au cours d'une dernière étape, le programme de commande d'installation annule la préparation du système d'exploitation, de sorte qu'après le redémarrage de l'ordinateur cible, le système d'exploitation active l'interface utilisateur déterminée par l'installation.

2. Procédé suivant la revendication 1, dans lequel le programme auxiliaire est présent en permanence dans une mémoire morte sur l'ordinateur cible.

3. Procédé suivant la revendication 1, dans lequel le programme auxiliaire est mémorisé sur l'installation (18) d'alimentation et est transmis par un programme de début initial se trouvant dans une mémoire morte sur l'ordinateur cible, de l'installation d'alimentation à l'installation cible et est exécuté.

4. Procédé suivant l'une des revendications 1 à 3, dans lequel on effectue l'exécution respectivement la transmission et l'exécution du programme auxiliaire, lorsqu'on n'a pas détecté de système d'exploitation valable ou lorsqu'un repère est positionné dans une mémoire de configuration.

5. Procédé suivant l'une des revendications précédentes, dans lequel on effectue la sélection des paquets de programmes à installer sur l'installation d'alimentation.

6. Procédé suivant l'une des revendications précédentes, dans lequel les moyens (24) de transmission de données de l'ordinateur cible (13) ont une adresse de réseau unique et on détermine le système d'exploitation à installer ou les paquets de programmes à installer par cette adresse de réseau.

7. Procédé suivant l'une des revendications précédentes, dans lequel on effectue, au lieu d'une nouvelle installation complète, une installation de remplacement, de correction ou une installation complémentaire.

8. Procédé suivant l'une des revendications précédentes, dans lequel on écrit pendant ou après l'installation des supports de données amovibles devant être fournis avec l'ordinateur cible à des fins de protection des données.

9. Procédé suivant la revendication 8, dans lequel on écrit dans les supports de données amovibles par un dispositif connecté à l'installation d'alimentation.
